# EUROPÄISCHE PATENTSCHRIFT

(11) **EP 3 454 013 B1**
(45) Veröffentlichungstag und Bekanntmachung des Hinweises auf die Patenterteilung: **20.10.2021**
(21) Anmeldenummer: 18188085.7
(22) Anmeldetag: 08.08.2018
(51) Int. Cl.: G01C 21/36, G06K 9/00, G02B 27/01, B60R 1/00, B60W 50/14, B60K 35/00, B60W 30/095, G08G 1/16, G08G 1/0962, B60Q 9/00

(54) **VERFAHREN, VORRICHTUNG UND COMPUTERLESBARES SPEICHERMEDIUM MIT INSTRUKTIONEN ZUR STEUERUNG EINER ANZEIGE EINER AUGMENTED-REALITY-DISPLAY-VORRICHTUNG FÜR EIN KRAFTFAHRZEUG**
METHOD, DEVICE AND A COMPUTER READABLE STORAGE MEDIUM WITH INSTRUCTIONS FOR CONTROLLING A DISPLAY OF AN AUGMENTED REALITY DISPLAY DEVICE FOR A MOTOR VEHICLE
PROCÉDÉ, DISPOSITIF ET SUPPORT D'ENREGISTREMENT LISIBLE PAR ORDINATEUR POURVU D'INSTRUCTIONS DE COMMANDE D'UN AFFICHAGE D'UN DISPOSITIF D'AFFICHAGE À RÉALITÉ AUGMENTÉE POUR UN VÉHICULE AUTOMOBILE

(30) Priorität: 12.09.2017 DE 102017216100
(43) Veröffentlichungstag der Anmeldung: 13.03.2019
(73) Patentinhaber: VOLKSWAGEN AKTIENGESELLSCHAFT, 38440 Wolfsburg (DE)
(72) Erfinder: HAAR, Adrian, 30173 Hannover (DE); KLEEN, Andro, 38100 Braunschweig (DE); MORALES FERNANDES, Daniel, 08223 Terrassa (ES); HAESKE, Adrian Benjamin, 50674 Köln (DE); SADOVITCH, Vitalij, 38102 Braunschweig (DE)

(56) Entgegenhaltungen:
- DE-A1-102011 120 878
- DE-A1-102014 203 805
- KR-A- 20160 065 722
- US-A1- 2015 243 171
- US-A1- 2016 325 676

## Beschreibung

Die vorliegende Erfindung betrifft ein Verfahren, eine Vorrichtung und ein computerlesbares Speichermedium mit Instruktionen zur Steuerung einer Anzeige einer Augmented-Reality-Display-Vorrichtung für ein Kraftfahrzeug. Die Erfindung betrifft weiterhin ein Kraftfahrzeug, in dem ein erfindungsgemäßes Verfahren oder eine erfindungsgemäße Vorrichtung eingesetzt wird.

Mit der stetigen Weiterentwicklung von Virtual und Augmented Reality-Technologien und Augmented Reality-Anwendungen finden diese auch Einzug in das Automobil. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt.

Eine mögliche technische Realisierung, um den Fahrerarbeitsplatz entsprechend mit perspektivisch korrekten virtuellen Erweiterungen anzureichern, bietet das Head-Up-Display (HUD). Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeuges wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss. Aktuelle Serien-Head-Up-Displays beschränken sich jedoch auf Anzeigen direkt unter dem primären Sichtbereich des Fahrers und enthalten redundante Informationen, wie z.B. die Geschwindigkeitsanzeige, die auch an anderer Stelle im Cockpit wiederzufinden sind. Diese Anzeigetechnologie reduziert zwar Blickabwendungen von der Straße, hat aber weiterhin den Nachteil, dass die präsentierten Informationen interpretiert und auf die reale Situation übertragen werden müssen, da sie nicht in der realen Szene registriert sind. Dies kann in komplexen Situationen einen mental beanspruchenden kognitiven Prozess darstellen. Durch Markieren von Objekten und Einblenden von Informationen an ihrem realen Bezugsort, d.h. durch eine kontaktanaloge Darstellung, lassen sich umweltbezogene Informationen im Sichtfeld des Fahrers direkt darstellen. Diese direkte grafische Anreicherung der Umwelt in Form von Augmented Reality kann die kognitiven Transferanforderungen erheblich reduzieren. Neben der Realisierung von Augmented-Reality-Darstellungen mittels eines Head-Up-Displays ist es auch möglich, entsprechende virtuelle Erweiterungen in den Fahrzeugspiegeln anzuzeigen, d.h. im Innenspiegel oder den Außenspiegeln. Ebenso können virtuelle Erweiterungen Bestandteil der Anzeigen einer Rückfahrkamera oder anderer Kameras sein.

Mit der Einführung leistungsstarker Sensortechnologien stellt sich das Problem, dass wichtige Informationen über die Umwelt und den Verkehr zwar technisch verfügbar sind, es aber an effektiven Möglichkeiten mangelt, diese Informationen auf eine verträgliche und überschaubare Art und Weise mitzuteilen. Augmented Reality bietet hierzu völlig neue Möglichkeiten, da Informationen direkt in der Umwelt dargestellt werden können. Obwohl solche Informationen deutlich intuitiver als bisher aufbereitet werden können, bleibt die nutzergerechte Verträglichkeit der Anzeigekonzepte dennoch ein wichtiges Ziel. Oberste Priorität hat hierbei immer eine angemessene Inanspruchnahme der Aufmerksamkeit bzw. der Informationsverarbeitung des Fahrers. Eine zusätzliche Belastung dieser kognitiven Prozesse, etwa durch Anzeigen, die erst aufwändig interpretiert und nur schwer verstanden werden können, soll in jedem Fall vermieden werden. Dies gilt umso mehr, wenn es sich um Anzeigen handelt, die an prominenter Stelle, im primären Sichtbereich des Fahrers, zum Einsatz kommen sollen. Für Augmented-Reality-Anwendungen stellt sich damit die Frage, wie die Anzeigekonzepte gestaltet sein müssen, um eine ressourcenarme Informationsverarbeitung zu erreichen.

Eine interessante Möglichkeit bietet die Verwendung von natürlichen Bewegungsmustern, die unter dem Begriff "Biological Motion" bzw. "biologische Bewegung" zusammengefasst werden [1]. Hierbei soll das menschliche Wahrnehmungssystem auf eine herkömmliche und bekannte Weise angesprochen werden. Mit der Verwendung biologisch verankerter Muster werden eine Reihe von Vorteilen verbunden, die im Wesentlichen auf einer sehr basalen und damit sehr schnellen Interpretationsleistung beruhen.

Bei der Darbietung von "Biological Motion"-Mustern werden beispielsweise menschliche oder tierische Bewegungen durch eine überschaubare Anzahl von graphischen Elementen dargestellt. Dabei zeigt sich, dass Menschen mühelos in der Lage sind, diese wenigen Reize beziehungsweise Bewegungen z.B. als Menschen zu erkennen. Darüber hinaus sind Probanden sogar in der Lage, Details, wie z.B. das Geschlecht oder das Gewicht einer Person, zu erkennen. Dieser Ansatz eignet sich in besonderer Weise zur Verwendung in Augmented-Reality-Anwendungen.

Vor diesem Hintergrund beschreibt beispielsweise die DE 10 2011 120 878 A1 ein Verfahren zur Erzeugung eines virtuellen Bildteils auf einer Bildanzeigeeinheit eines Fahrzeugs. Mittels einer Bilderfassungseinrichtung des Fahrzeugs wird eine Umgebung des Fahrzeugs erfasst. Die aufgenommenen Bilddaten werden zur Detektion eines Lebewesens ausgewertet. Zur Wahrnehmung des detektierten Lebewesens durch einen Fahrzeuginsassen wird in dessen Sichtfeld eine Anzeigeposition des detektierten Lebewesens auf der Bildanzeigeeinheit durch den virtuellen Bildteil markiert. Dabei wird zur Markierung des Lebewesens eine geordnete Gruppe von eine Bewegung ausführenden Lichtpunkten erzeugt, wobei die Lichtpunkte wenigstens die Orte einiger Körperteile einer dem erkannten Lebewesen entsprechenden Körperform darstellen.

Die US 2015/0243171 A1 beschreibt ein Verfahren zur Erzeugung einer Anzeige für eine Anzeigevorrichtung eines Kraftfahrzeugs, beispielsweise eines Head-Up-Displays. Eine Erkennungseinheit erhält ein Bild in Fahrtrichtung, das die Ansicht des Fahrers des Fahrzeugs nach vorne darstellt. Danach extrahiert die Erkennungseinheit ein Merkmal, das in dem Bild enthalten ist, und erkennt ein vorbestimmtes Objekt auf der Basis des extrahierten Merkmals. Falls es sich beim erkannten Objekt um eine Person handelt, wird diese Person auf der Anzeigevorrichtung in Form einer bewegten Lichtpunktfigur dargestellt.

Die WO 2017/019725 A1 beschreibt u.a. ein Verfahren zur Erzeugung einer Anzeige eines Head-Up-Displays. Um die Sichtbarkeit von Objekten innerhalb einer Szene im Head-Up-Display zu verbessern, wird ein Fußgänger, der in einer beleuchteten Szene vorhanden sein kann, wie beispielsweise innerhalb eines Sichtfeldes eines Scheinwerfers, durch eine Überlagerung mit einer bewegten Lichtpunktfigur im Head-Up-Display hervorgehoben.

Es ist davon auszugehen, dass die virtuellen Projektionsflächen moderner Head-Up-Display-Systeme weiterhin nur einen verhältnismäßig kleinen Teil der Windschutzscheibe abdecken werden. Daraus resultiert u.a. ein Problem für die Warnung vor Fußgängerkollisionen. Befinden sich Fußgänger z.B. sehr weit rechts, also noch außerhalb der virtuellen Projektionsfläche, können diese zwar durch die Fahrzeugsensoren wahrgenommen, nicht aber durch eine Augmented-Reality-Darstellung hervorgehoben werden. Ebenso denkbar ist, dass eine Person noch vollkommen verdeckt ist, z.B. durch eine Häuserwand, eine mögliche Kollision aber anhand von verfügbaren Informationen vorhergesagt werden kann. In beiden Fällen besteht das Problem, dass die aktuelle und zukünftige Position eines Fußgängers bekannt sind, ohne dass aber die eigentliche Projektionsfläche erreicht ist.

Es ist eine Aufgabe der Erfindung, Lösungen für eine verbesserte Steuerung einer Anzeige einer Augmented-Reality-Display-Vorrichtung für ein Kraftfahrzeug aufzuzeigen.

Diese Aufgabe wird durch ein Verfahren mit den Merkmalen des Anspruchs 1, durch ein computerlesbares Speichermedium mit Instruktionen gemäß Anspruch 6 und durch eine Vorrichtung mit den Merkmalen des Anspruchs 7 gelöst. Bevorzugte Ausgestaltungen der Erfindung sind Gegenstand der abhängigen Ansprüche.

Gemäß einem ersten Aspekt der Erfindung umfasst ein Verfahren zur Steuerung einer Anzeige einer Augmented-Reality-Display-Vorrichtung für ein Kraftfahrzeug die Schritte:
- Erkennen einer möglichen Gefahrensituation;
- Generieren eines virtuellen Objekts zur Anzeige durch die Augmented-Reality-Display-Vorrichtung, wobei das virtuelle Objekt sich bewegende graphische Elemente aufweist, die eine Bewegung des virtuellen Objekts simulieren; und
- Ausgeben des virtuellen Objekts zur Anzeige durch die Augmented-Reality-Display-Vorrichtung;
wobei die mögliche Gefahrensituation auf Grundlage von Navigationsinformationen erkannt wird, wobei die Navigationsinformationen Orte kennzeichnen, an denen auf möglicherweise gefährliche Verkehrssituationen hingewiesen werden soll, und das virtuelle Objekt die mögliche Gefahrensituation in Form eines potentiellen Gefahrenobjekts visualisiert.

Gemäß einem weiteren Aspekt der Erfindung enthält ein computerlesbares Speichermedium Instruktionen, die bei Ausführung durch einen Computer den Computer zur Ausführung der folgenden Schritte zur Steuerung einer Anzeige einer Augmented-Reality-Display-Vorrichtung für ein Kraftfahrzeug veranlassen:
- Erkennen einer möglichen Gefahrensituation;
- Generieren eines virtuellen Objekts zur Anzeige durch die Augmented-Reality-Display-Vorrichtung, wobei das virtuelle Objekt sich bewegende graphische Elemente aufweist, die eine Bewegung des virtuellen Objekts simulieren; und
- Ausgeben des virtuellen Objekts zur Anzeige durch die Augmented-Reality-Display-Vorrichtung;
wobei die mögliche Gefahrensituation auf Grundlage von Navigationsinformationen erkannt wird, wobei die Navigationsinformationen Orte kennzeichnen, an denen auf möglicherweise gefährliche Verkehrssituationen hingewiesen werden soll, und das virtuelle Objekt die mögliche Gefahrensituation in Form eines potentiellen Gefahrenobjekts visualisiert.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zur Steuerung einer Anzeige einer Augmented-Reality-Display-Vorrichtung für ein Kraftfahrzeug auf:
- Eine Analyseeinheit zum Erkennen einer möglichen Gefahrensituation;
- Einen Grafikgenerator zum Generieren eines virtuellen Objekts zur Anzeige durch die Augmented-Reality-Display-Vorrichtung, wobei das virtuelle Objekt sich bewegende graphische Elemente aufweist, die eine Bewegung des virtuellen Objekts simulieren; und
- Einen Ausgang zum Ausgeben des virtuellen Objekts zur Anzeige durch die Augmented-Reality- Display-Vorrichtung;
wobei die mögliche Gefahrensituation auf Grundlage von Navigationsinformationen erkannt wird, wobei die Navigationsinformationen Orte kennzeichnen, an denen auf möglicherweise gefährliche Verkehrssituationen hingewiesen werden soll, und das virtuelle Objekt die mögliche Gefahrensituation in Form eines potentiellen Gefahrenobjekts visualisiert.

Erfindungsgemäß ist vorgesehen, mittels eines virtuellen Objekts, das sich bewegende graphische Elemente aufweist, auf mögliche Gefahrensituationen hinzuweisen. Durch die Verwendung sich bewegender graphischer Elemente können natürliche Bewegungsmuster realisiert werden, die vom Fahrer intuitiv erfasst werden können. Dabei ist vorgesehen, dass das virtuelle Objekt ein potentielles Gefahrenobjekt darstellt. Das potentielle Gefahrenobjekt kann beispielsweise ein Verkehrsteilnehmer oder ein Hindernis sein. Durch die Darstellung potentieller Gefahrenobjekte kann auch ohne Vorhandensein eines realen Gefahrenobjekts auf möglicherweise gefährliche Verkehrssituationen hingewiesen werden, so dass der Fahrer entsprechend vorsichtig agieren kann. Beispielsweise kann durch die Darstellung eines laufenden Tieres auf einen Straßenbereich mit der Gefahr von Wildwechsel hingewiesen werden. Eine Darstellung spielender Kinder kann die Nähe einer Schule verdeutlichen, ein hüpfender Ball auf eine Spielstraße hinweisen.

Auch beim automatischen Fahren kann die erfindungsgemäße Lösung vorteilhaft eingesetzt werden. Beispielsweise können laufende Kinder als Begründung für eine verlangsamte automatische Fahrt eingeblendet werden. Etwaige Systemhandlungen werden dadurch transparent und nachvollziehbar. Dieses Vorgehen wirkt sich positiv auf das Vertrauen von Fahrern aus, wodurch die Nutzung und die Kaufbereitschaft automatisch fahrender Fahrzeuge begünstigt wird.

Das Erkennen einer möglichen Gefahrensituation erfolgt auf Grundlage von Navigationsinformationen. Potentielle Gefahrenobjekte, beispielsweise aufgrund von Wildwechsel oder dem Vorhandensein einer Schule, können ohne größeren Aufwand aus den verfügbaren Navigationsinformationen ermittelt werden.

Die sich bewegenden graphischen Elemente bilden eine Lichtpunktgruppe, die ein reales Objekt nachbildet. Beispielsweise kann die Lichtpunktgruppe einen Menschen nachbilden. Auf diese Weise werden für den Fahrer damit bereits menschliche Bewegungen innerhalb der Anzeige des Head-Up-Displays sichtbar, ohne dass überhaupt ein Mensch sichtbar sein muss. Auf entsprechende Weise kann natürlich auch auf Tiere, Fahrzeuge oder andere Objekte hingewiesen werden. Somit entsteht eine einheitliche und subtile Designsprache, die es dem Fahrer ermöglicht, bevorstehende Ereignisse besser zu antizipieren.

Gemäß einem Aspekt der Erfindung weist die Augmented-Reality-Display-Vorrichtung ein Head-Up-Display oder ein Display in zumindest einem Spiegel des Kraftfahrzeugs auf. Ein Head-Up-Display ist ideal geeignet, um dem Fahrer die gewünschten Hinweise zu vermitteln, ohne die Aufmerksamkeit des Fahrers von der Straße zu lenken.

Besonders vorteilhaft werden ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt eine Darstellung einer menschlichen Person als Lichtpunktgruppe;
- Fig. 2: zeigt schematisch ein Verfahren zur Steuerung einer Anzeige einer Augmented-Reality-Display-Vorrichtung für ein Kraftfahrzeug;
- Fig. 3: zeigt eine erste Ausführungsform einer Vorrichtung zur Steuerung einer Anzeige einer Augmented-Reality-Display-Vorrichtung für ein Kraftfahrzeug;
- Fig. 4: zeigt eine zweite Ausführungsform einer Vorrichtung zur Steuerung einer Anzeige einer Augmented-Reality-Display-Vorrichtung für ein Kraftfahrzeug;
- Fig. 5: stellt schematisch ein Kraftfahrzeug dar, in dem eine erfindungsgemäße Lösung realisiert ist;
- Fig. 6: zeigt schematisch den allgemeinen Aufbau einer Head-Up-Display-Vorrichtung für ein Kraftfahrzeug;
- Fig. 7: zeigt ein erstes Beispiel einer Visualisierung eines tatsächlichen Gefahrenobjekts in einer Augmented-Reality-Darstellung;
- Fig. 8: zeigt ein zweites Beispiel einer Visualisierung eines tatsächlichen Gefahrenobjekts in einer Augmented-Reality-Darstellung; und
- Fig. 9: zeigt ein Beispiel einer Visualisierung einer Fahranweisung in einer Augmented-Reality-Darstellung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

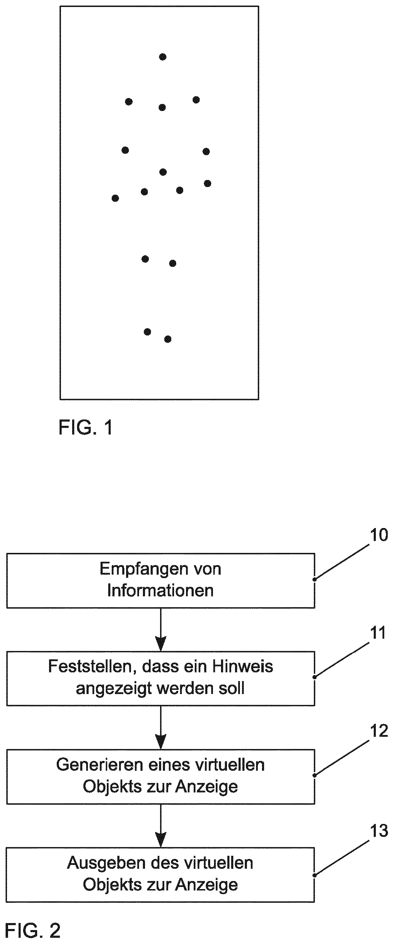

Fig. 1 zeigt eine Darstellung einer menschlichen Person als Lichtpunktgruppe, wobei die einzelnen Lichtpunkte hier schwarz dargestellt sind. Obwohl es sich lediglich um eine minimale Informationsmenge basierend auf nur 15 Punkten handelt, erkennen Menschen mühelos die dargestellte Person darin, insbesondere wenn animierte Bewegungen dargestellt werden. Diese Ansätze biologischer Bewegung gehen einher mit einer sehr schnellen, weil natürlichen Informationsverarbeitung. Sie sollen im Folgenden auf Anwendungsfälle im Automobilbereich bezogen werden.

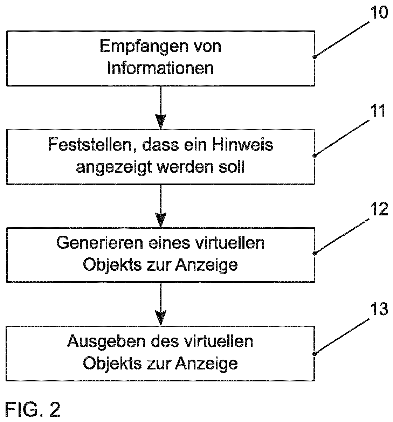

Fig. 2 zeigt schematisch ein Verfahren zur Steuerung einer Anzeige einer Augmented-Reality-Display-Vorrichtung für ein Kraftfahrzeug, beispielsweise eines Head-Up-Displays oder eines Displays in zumindest einem Spiegel des Kraftfahrzeugs. In einem ersten Schritt werden Informationen empfangen 10, beispielsweise Navigationsdaten. Anhand der empfangenen Informationen wird das Vorliegen einer Fahrsituation festgestellt 11, in der ein Hinweis für einen Fahrer des Kraftfahrzeugs angezeigt werden soll. Es wird daraufhin ein virtuelles Objekt zur Anzeige durch die Augmented-Reality-Display-Vorrichtung generiert 12. Durch das virtuelle Objekt werden mögliche Gefahrensituationen visualisiert. Dabei weist das virtuelle Objekt sich bewegende graphische Elemente auf, die eine Bewegung des virtuellen Objekts simulieren. Beispielsweise bilden die sich bewegenden graphischen Elemente eine Lichtpunktgruppe, die ein reales Objekt nachbildet. Das generierte virtuelle Objekt wird schließlich zur Anzeige durch die Augmented-Reality-Display-Vorrichtung ausgegeben 13. Dabei repräsentiert das virtuelle Objekt ein potentielles Gefahrenobjekt im Umfeld des Kraftfahrzeugs, z.B. einen Verkehrsteilnehmer oder ein Hindernis.

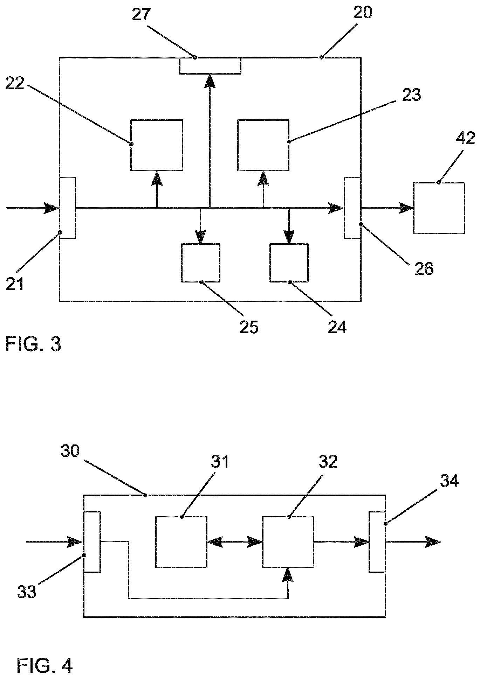

Fig. 3 zeigt eine vereinfachte schematische Darstellung einer ersten Ausführungsform einer Vorrichtung 20 zur Steuerung einer Anzeige einer Augmented-Reality-Display-Vorrichtung für ein Kraftfahrzeug, beispielsweise eines Head-Up-Displays oder eines Displays in zumindest einem Spiegel des Kraftfahrzeugs. Die Vorrichtung 20 hat einen Eingang 21, über den Informationen empfangen werden können, beispielsweise Navigationsdaten. Die Vorrichtung 20 hat zudem eine Analyseeinheit 22, die auf Grundlage der empfangenen Informationen eine Fahrsituation feststellt, in der ein Hinweis für einen Fahrer des Kraftfahrzeugs angezeigt werden soll. Ein Grafikgenerator 23 generiert ein virtuelles Objekt zur Anzeige durch die Augmented-Reality-Display-Vorrichtung, wobei durch das virtuelle Objekt mögliche Gefahrensituationen visualisiert werden. Dabei weist das virtuelle Objekt sich bewegende graphische Elemente auf, die eine Bewegung des virtuellen Objekts simulieren. Beispielsweise bilden die sich bewegenden graphischen Elemente eine Lichtpunktgruppe, die ein reales Objekt nachbildet. Über einen Ausgang 26 der Vorrichtung 20 wird das generierte virtuelle Objekt an ein Steuergerät 42 der Augmented-Reality-Display-Vorrichtung ausgegeben. Alternativ kann auch lediglich eine Anweisung an das Steuergerät 42 ausgegeben werden, ein entsprechendes virtuelles Objekt zu generieren. Das Steuergerät 42 kann dann das generierte virtuelle Objekt in eine Anzeige der Augmented-Reality-Display-Vorrichtung einfügen. Dabei repräsentiert das virtuelle Objekt ein potentielles Gefahrenobjekt im Umfeld des Kraftfahrzeugs, z.B. einen Verkehrsteilnehmer oder ein Hindernis.

Die Analyseeinheit 22 und der Grafikgenerator 23 können von einer Kontrolleinheit 24 gesteuert werden. Über eine Benutzerschnittstelle 27 können gegebenenfalls Einstellungen der Analyseeinheit 22, des Grafikgenerators 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Analyseeinheit 22, der Grafikgenerator 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 26 können als getrennte Schnittstellen oder als eine kombinierte bidirektionale Schnittstelle implementiert sein. Im beschriebenen Beispiel ist die Vorrichtung 20 eine eigenständige Komponente. Sie kann aber ebenso im Steuergerät 42 der Augmented-Reality-Display-Vorrichtung integriert sein.

Fig. 4 zeigt eine vereinfachte schematische Darstellung einer zweiten Ausführungsform einer Vorrichtung 30 zur Steuerung einer Anzeige einer Augmented-Reality-Display-Vorrichtung für ein Kraftfahrzeug. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Navigationsdaten. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nicht-volatile Speicherbereiche aufweisen und unterschiedlichste Speichergeräte und Speichermedien umfassen, beispielsweise Festplatten, optische Speichermedien oder Halbleiterspeicher.

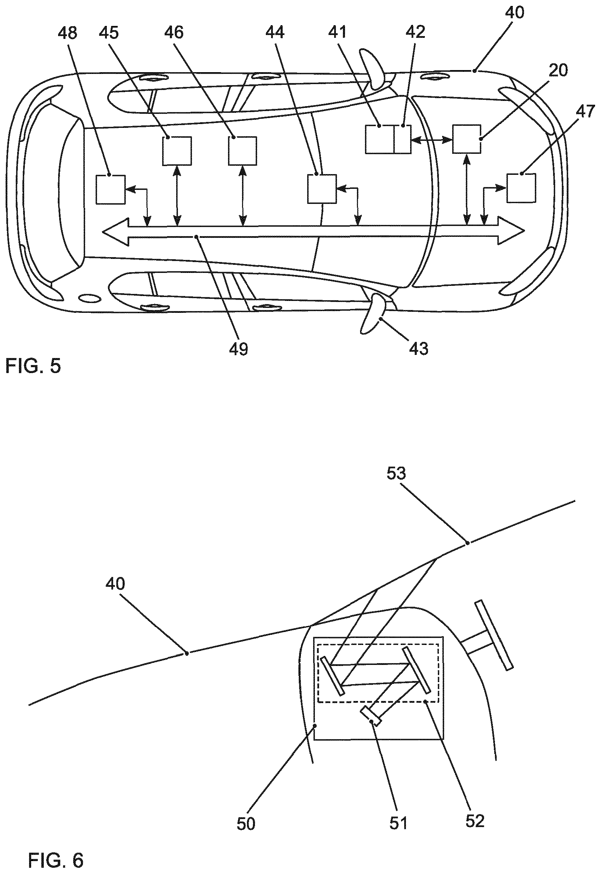

Fig. 5 stellt schematisch ein Kraftfahrzeug 40 dar, in dem eine erfindungsgemäße Lösung realisiert ist. Das Kraftfahrzeug 40 weist eine Augmented-Reality-Display-Vorrichtung 41 mit einem zugehörigen Steuergerät 42 auf. Bei der Augmented-Reality-Display-Vorrichtung 41 kann es sich beispielsweise um eine Head-Up-Display-Vorrichtung handeln. Daneben kann die Augmented-Reality-Display-Vorrichtung 41 aber auch Anzeigen in den Spiegeln des Kraftfahrzeugs 40 aufweisen, beispielsweise in den Außenspiegeln 43. Weiterhin weist das Kraftfahrzeug 40 eine Vorrichtung 20 zur Steuerung einer Anzeige der Augmented-Reality-Display-Vorrichtung 41 auf. Die Vorrichtung 20 kann natürlich auch in die Augmented-Reality-Display-Vorrichtung 41 oder in das Steuergerät 42 der Augmented-Reality-Display-Vorrichtung 41 integriert sein. Weitere Komponenten des Kraftfahrzeugs 40 sind eine Sensorik 44 zur Erfassung von Gefahrenobjekten, ein Navigationssystem 45, eine Datenübertragungseinheit 46 sowie eine Reihe von Assistenzsystemen 47, von denen eines exemplarisch dargestellt ist. Mittels der Datenübertragungseinheit 46 kann eine Verbindung zu Dienstanbietern aufgebaut werden, beispielsweise zum Abrufen von Kartendaten oder Gefahrinformationen. Zur Speicherung von Daten ist ein Speicher 48 vorhanden. Der Datenaustausch zwischen den verschiedenen Komponenten des Kraftfahrzeugs 40 erfolgt über ein Netzwerk 49. Die Sensorik 44 kann beispielsweise eine Kamera sowie Lidar-, Radar- oder Ultraschallsensoren aufweisen.

Fig. 6 zeigt als Beispiel für eine Augmented-Reality-Display-Vorrichtung schematisch eine Head-Up-Display-Vorrichtung 50 für ein Kraftfahrzeug 40, mit deren Hilfe Inhalte auf einer Projektionsfläche 53 des Kraftfahrzeugs 40 angezeigt werden können, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 51 erzeugt und mit Hilfe eines optischen Moduls 52 auf die Projektionsfläche 53 projiziert. Typischerweise erfolgt die Projektion dabei in einen Bereich der Frontscheibe oberhalb des Lenkrades. Die bildgebende Einheit 51 kann beispielsweise ein LCD-TFT-Display sein. Die Head-Up-Display-Vorrichtung 50 ist in der Regel in einem Armaturenbrett des Kraftfahrzeugs 40 verbaut.

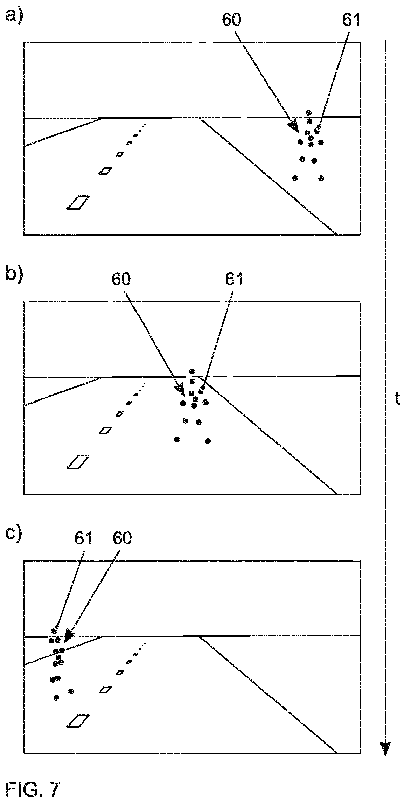

Fig. 7 zeigt ein erstes Beispiel einer Visualisierung eines tatsächlichen Gefahrenobjekts durch ein virtuelles Objekt 60 in einer Augmented-Reality-Darstellung innerhalb einer Head-Up-Display-Anzeige. Dargestellt ist die zeitliche Entwicklung des virtuellen Objekts 60 anhand dreier aufeinanderfolgender Zeitpunkte. Das tatsächliche Gefahrenobjekt ist in diesem Beispiel eine Person, die entweder noch vollkommen verdeckt ist oder sich zumindest außerhalb der virtuellen Projektionsfläche des Head-Up-Displays befindet. Durch das virtuelle Objekt 60, das aus einzelnen sich bewegenden graphischen Elementen 61 zusammengesetzt ist, wird eine die Straße querende Person visualisiert. Die laufende Figur ist leicht als Mensch interpretierbar und trägt dazu bei, auf die Anwesenheit der Person und die damit verbundene Gefahr hinzuweisen. Auf entsprechende Weise können auch Hindernisse visualisiert werden, beispielsweise ein auf die Straße rollender Ball oder ein in den Fahrbahnbereich ragender Gegenstand.

Der in Fig. 7 dargestellte Ansatz kann ebenso in weniger kritischen Situationen Verwendung finden. Ein Beispiel dafür ist die Sensibilisierung des Fahrers für bestimmte Orte, wie Zebrastreifen, Bushaltestellen oder Schulen. In diesen Fällen können die "Biological Motion"-Figuren z.B. eine Straße überqueren, ohne dass eine tatsächliche Person zugegen ist. Es werden also potentielle Gefahrenobjekte dargestellt. Die Darstellung der Figuren kann sich an den jeweiligen Gegebenheiten orientieren, indem beispielsweise an Schulen rennende Kinder dargestellt werden können. Um zu starke Fahrerreaktionen auszuschließen, kann auch davon abgesehen werden, die künstlichen Personen die Straße überqueren zu lassen. Stattdessen ist die Positionierung der Animationen am Straßenrand oder auf dem Gehweg möglich. Zudem sollte darauf geachtet werden, dass zu jeder Zeit eindeutig ist, ob tatsächlich vorhandene oder lediglich fiktive Personen visualisiert werden. Dazu kann es sinnvoll sein, wenn im Fahrzeug nur einer der beschriebenen Ansätze realisiert ist, d.h. entweder nur tatsächlich vorhandene oder nur fiktive Personen visualisiert werden.

Eine weitere, davon unabhängige Funktion ist die Möglichkeit, auf eine intuitive Art und Weise fahrerrelevante Informationen über einen bestimmten Streckenabschnitt zu liefern. Beispielsweise kann ein Gebiet mit starkem Wildwechsel durch das subtile Andeuten eines virtuellen Rehs, das aus Leuchtpunkten besteht und sich über die Straße bewegt, angekündigt werden. Gleichermaßen kann in einer Zone mit Schrittgeschwindigkeit ein virtueller Ball über die Straße rollen.

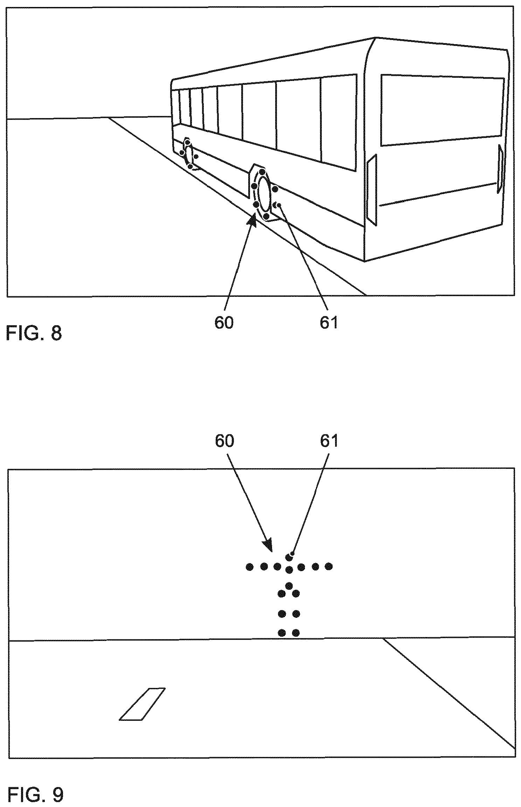

Fig. 8 zeigt ein zweites Beispiel einer Visualisierung eines tatsächlichen Gefahrenobjekts in einer Augmented-Reality-Darstellung. Gezeigt ist ein stehender Bus, welcher an einer Bushaltestelle hält. Kurz vor Abfahrt des Busses werden aus Punkten bestehende Kreise auf den Reifen des Busses angezeigt, die sich zu drehen beginnen. Dies kündigt das in Kürze bevorstehende Losfahren des Busses an. Diese Funktion kann sowohl beim automatisierten als auch beim manuellen Fahren Anwendung finden. Die dazu notwenigen Informationen können sowohl über Car-to-Car-Kommunikation (Datenaustausch zwischen Kraftfahrzeugen), mobile Daten oder aus eigenen, sensorbasierten Vorhersagealgorithmen stammen. Eine weitere Möglichkeit ist die Einblendung entsprechender Reifenbewegungen von noch verdeckten Fahrzeugen.

Fig. 9 zeigt ein Beispiel einer Visualisierung einer Fahranweisung in einer Augmented-Reality-Darstellung. Dargestellt ist der Fall einer Durchfahrtsbeschränkung, ausgedrückt durch eine entsprechende Geste einer "Biological Motion"-Figur. Verwendet werden können hier jegliche Bewegungen eines "virtuellen menschlichen Einweisers", die dazu beitragen, den Anweisungen eines Navigationsgerätes oder einer Park- und Rangierhilfe zu folgen. Beispielsweise können entsprechende Figuren an Straßenkreuzungen postiert werden und mit Wink- oder Zeigegesten auf die zu wählende Straße oder Abbiegung hinweisen. Ebenso können Ausweichmanöver im Notfall durch eine derartige Figur visualisiert werden.

Vorzugsweise sind die oben beschriebenen Warn- und Informationskonzepte für Fahrer auswählbar und parametrierbar. Beispielsweise kann eine geschwindigkeitsabhängige Umsetzung der Konzepte vorgesehen sein.

### Bezugszeichenliste

- 10: Empfangen von Informationen
- 11: Feststellen, dass ein Hinweis angezeigt werden soll
- 12: Generieren eines virtuellen Objekts zur Anzeige
- 13: Ausgeben des virtuellen Objekts zur Anzeige
- 20: Vorrichtung
- 21: Eingang
- 22: Analyseeinheit
- 23: Grafikgenerator
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Kraftfahrzeug
- 41: Augmented-Reality-Display-Vorrichtung
- 42: Steuergerät der Augmented-Reality-Display-Vorrichtung
- 43: Außenspiegel
- 44: Sensorik
- 45: Navigationssystem
- 46: Datenübertragungseinheit
- 47: Assistenzsystem
- 48: Speicher
- 49: Netzwerk
- 50: Head-Up-Display-Vorrichtung
- 51: Bildgebende Einheit
- 52: Optisches Modul
- 53: Projektionsfläche
- 60: Virtuelles Objekt
- 61: Graphisches Element

### Referenzen

[1] Johansson: "Visual perception of biological motion and a model for its analysis". Percept. Psychophys. Vol. 14 (1973), S. 201-211

## Patentansprüche

1. Verfahren zur Steuerung einer Anzeige einer Augmented-Reality-Display-Vorrichtung (41) für ein Kraftfahrzeug (40), mit den Schritten:
- Erkennen (11) einer möglichen Gefahrensituation;
- Generieren (12) eines virtuellen Objekts (60) zur Anzeige durch die Augmented-Reality-Display-Vorrichtung (41), wobei das virtuelle Objekt (60) sich bewegende graphische Elemente (61) aufweist, die eine Bewegung des virtuellen Objekts (60) simulieren; und
- Ausgeben (13) des virtuellen Objekts (60) zur Anzeige durch die Augmented-Reality-Display-Vorrichtung (41);
**dadurch gekennzeichnet, dass** die mögliche Gefahrensituation auf Grundlage von Navigationsinformationen erkannt wird (11), wobei die Navigationsinformationen Orte kennzeichnen, an denen auf möglicherweise gefährliche Verkehrssituationen hingewiesen werden soll, und das virtuelle Objekt (60) die mögliche Gefahrensituation in Form eines potentiellen Gefahrenobjekts visualisiert.

2. Verfahren gemäß Anspruch 1, wobei die sich bewegenden graphischen Elemente (61) eine Lichtpunktgruppe bilden, die ein reales Objekt nachbildet.

3. Verfahren gemäß Anspruch 1 oder 2, wobei das potentielle Gefahrenobjekt ein Verkehrsteilnehmer oder ein Hindernis ist.

4. Verfahren gemäß einem der vorherigen Ansprüche, wobei das virtuelle Objekt (60) eine Person oder ein Tier nachbildet.

5. Verfahren gemäß einem der vorherigen Ansprüche, wobei die Augmented-Reality-Display-Vorrichtung (41) ein Head-Up-Display (50) oder ein Display in zumindest einem Spiegel (43) des Kraftfahrzeugs (40) aufweist.

6. Computerlesbares Speichermedium mit Instruktionen, die bei Ausführung durch einen Computer den Computer zur Ausführung der Schritte eines Verfahrens gemäß einem der Ansprüche 1 bis 5 zur Steuerung einer Anzeige einer Augmented-Reality-Display-Vorrichtung (41) für ein Kraftfahrzeug (40) veranlassen.

7. Vorrichtung (20) zur Steuerung einer Anzeige einer Augmented-Reality-Display-Vorrichtung (41) für ein Kraftfahrzeug (40), mit:
- einer Analyseeinheit (22) zum Erkennen (11) einer möglichen Gefahrensituation;
- einem Grafikgenerator (23) zum Generieren (12) eines virtuellen Objekts (60) zur Anzeige durch die Augmented-Reality-Display-Vorrichtung (41), wobei das virtuelle Objekt (60) sich bewegende graphische Elemente (61) aufweist, die eine Bewegung des virtuellen Objekts (60) simulieren; und
- einem Ausgang (26) zum Ausgeben (13) des virtuellen Objekts (60) zur Anzeige durch die Augmented-Reality-Display-Vorrichtung (41);
**dadurch gekennzeichnet, dass** die mögliche Gefahrensituation auf Grundlage von Navigationsinformationen erkannt wird (11), wobei die Navigationsinformationen Orte kennzeichnen, an denen auf möglicherweise gefährliche Verkehrssituationen hingewiesen werden soll, und das virtuelle Objekt (60) die mögliche Gefahrensituation in Form eines potentiellen Gefahrenobjekts visualisiert.

8. Kraftfahrzeug (40) mit einer Augmented-Reality-Display-Vorrichtung (41), **dadurch gekennzeichnet, dass** das Kraftfahrzeug (40) eine Vorrichtung (20) gemäß Anspruch 7 aufweist oder eingerichtet ist, ein Verfahren gemäß einem der Ansprüche 1 bis 5 zur Steuerung einer Anzeige der Augmented-Reality-Display-Vorrichtung (41) auszuführen.

## Claims

1. Method for controlling a display of an augmented reality display apparatus (41) for a motor vehicle (40), having the steps of:
- detecting (11) a potential hazardous situation;
- generating (12) a virtual object (60) for display by the augmented reality display apparatus (41), wherein the virtual object (60) has moving graphical elements (61) that simulate a movement of the virtual object (60); and
- outputting (13) the virtual object (60) for display by the augmented reality display apparatus (41);
**characterized in that** the potential hazardous situation is detected (11) based on navigation information, wherein the navigation information marks locations at which potential hazardous traffic situations are intended to be pointed out, and the virtual object (60) visualizes the potential hazardous situation in the form of a potential hazardous object.

2. Method according to Claim 1, wherein the moving graphical elements (61) form a light point group that simulates a real object.

3. Method according to Claim 1 or 2, wherein the potential hazardous object is a road user or an obstacle.

4. Method according to one of the preceding claims, wherein the virtual object (60) simulates a person or an animal.

5. Method according to one of the preceding claims, wherein the augmented reality display apparatus (41) has a head-up display (50) or a display in at least one mirror (43) of the motor vehicle (40) .

6. Computer-readable storage medium with instructions which, when executed by a computer, cause the computer to execute the steps of a method according to one of Claims 1 to 5 for controlling a display of an augmented reality display apparatus (41) for a motor vehicle (40).

7. Apparatus (20) for controlling a display of an augmented reality display apparatus (41) for a motor vehicle (40), having:
- an analysis unit (22) for detecting (11) a potential hazardous situation;
- a graphics generator (23) for generating (12) a virtual object (60) for display by the augmented reality display apparatus (41), wherein the virtual object (60) has moving graphical elements (61) that simulate a movement of the virtual object (60); and
- an output (26) for outputting (13) the virtual object (60) for display by the augmented reality display apparatus (41);
**characterized in that** the potential hazardous situation is detected (11) based on navigation information, wherein the navigation information marks locations at which potential hazardous traffic situations are intended to be pointed out, and the virtual object (60) visualizes the potential hazardous situation in the form of a potential hazardous object.

8. Motor vehicle (40) with an augmented reality display apparatus (41), **characterized in that** the motor vehicle (40) has an apparatus (20) according to Claim 7 or is configured to execute a method according to one of Claims 1 to 5 for controlling a display of the augmented reality display apparatus (41).

## Revendications

1. Procédé de commande d'un affichage d'un dispositif d'affichage à réalité augmentée (41) pour un véhicule automobile (40), comprenant les étapes consistant à :
identifier (11) une situation de danger potentielle ;
- générer (12) un objet virtuel (60) à afficher sur le dispositif d'affichage à réalité augmentée (41), l'objet virtuel (60) présentant des éléments graphiques animés (61) qui simulent un déplacement de l'objet virtuel (60) ; et
- sortir (13) l'objet virtuel (60) à afficher par le dispositif d'affichage à réalité augmentée (41) ;
**caractérisé en ce que** la situation de danger potentielle est identifiée (11) sur la base d'informations de navigation, les informations de navigation caractérisant des endroits où il s'agit de signaler des situations de trafic potentiellement dangereuses, et l'objet virtuel (60) visualisant la situation de danger potentielle sous la forme d'un objet présentant un danger potentiel.

2. Procédé selon la revendication 1, dans lequel les éléments graphiques animés (61) forment un groupe de points lumineux qui imite un objet réel.

3. Procédé selon la revendication 1 ou 2, dans lequel l'objet présentant un danger potentiel est un usager de la route ou un obstacle.

4. Procédé selon l'une quelconque des revendications précédentes, dans lequel l'objet virtuel (60) imite une personne ou un animal.

5. Procédé selon l'une quelconque des revendications précédentes, dans lequel le dispositif d'affichage à réalité augmentée (41) présente un affichage tête haute (50) ou un affichage dans au moins un miroir (43) du véhicule automobile (40).

6. Support de stockage lisible par ordinateur, comprenant des instructions qui, lorsqu'elles sont exécutées par un ordinateur, font que l'ordinateur exécute les étapes d'un procédé selon l'une quelconque des revendications 1 à 5 pour commander un affichage d'un dispositif d'affichage à réalité augmentée (41) pour un véhicule automobile (40).

7. Dispositif (20) de commande d'un affichage d'un dispositif d'affichage à réalité augmentée (41) pour un véhicule automobile (40), comprenant :
- une unité d'analyse (22) pour identifier (11) une situation de danger potentielle ;
- un générateur de graphique (23) pour générer (12) un objet virtuel (60) à afficher par le dispositif d'affichage à réalité augmentée (41), l'objet virtuel (60) présentant des éléments graphiques animés (61) qui simulent un déplacement de l'objet virtuel (60) ; et
- une sortie (26) pour sortir (13) l'objet virtuel (60) à afficher par le dispositif d'affichage à réalité augmentée (41) ;
**caractérisé en ce que** la situation de danger potentielle est identifiée (11) sur la base d'informations de navigation, les informations de navigation caractérisant des endroits où il s'agit de signaler des situations de trafic potentiellement dangereuses, et l'objet virtuel (60) visualisant la situation de danger potentielle sous la forme d'un objet présentant un danger potentiel.

8. Véhicule automobile (40) comprenant un dispositif d'affichage à réalité augmentée (41), **caractérisé en ce que** le véhicule automobile (40) présente un dispositif (20) selon la revendication 7 ou est aménagé pour exécuter un procédé selon l'une quelconque des revendications 1 à 5 pour commander un affichage du dispositif d'affichage à réalité augmentée (41).
